# EUROPEAN PATENT SPECIFICATION

(11) **EP 1 420 176 B1**
(45) Date of publication and mention of the grant of the patent: **17.08.2005**
(21) Application number: 03256695.2
(22) Date of filing: 23.10.2003
(51) Int. Cl.: F16B 39/10

(54) **Rotation inhibiting system for adjacent nuts or bolts**
System zur Verhinderung der Umdrehung für nebeneinanderliegende Schraubenmuttern oder Schraubenbolzen
Système visant l'empêchement de la rotation pour des noix ou boulons juxtaposés

(30) Priority: 14.11.2002 GB 0226535
(43) Date of publication of application: 19.05.2004
(73) Proprietor: Business Lines Limited, Kirkby Lonsdale, Cumbria LA6 2DY (GB)
(72) Inventor: Marczynski, Michael, Kirkby Lonsdale Cumbria LA6 2NP (GB); Marriot, John, Axbridge Somerset BS26 2RH (GB)
(74) Representative: Harrison Goddard Foote

(56) References cited:
- FR-A- 2 603 845
- GB-A- 2 283 551

## Description

This invention concerns a device for fitting to a pair of adjacent nuts or bolts in order to keep them in a locked or tightened condition, i.e. to prevent them from loosening over time.

Various prior art devices have been proposed to inhibit the loosening of vehicle wheel nuts by linking together adjacent pairs of such nuts, for example by a looped wire device, which encircles the respective nuts, as described in GB 2132301 and GB 2283551 or by securing together, by means of a strap or wire, respective sockets which fit over the respective nuts, for example as described in GB2260177 and also in GB2132301.

An object of the present invention is to provide an alternative device specifically in order to prevent the accidental unscrewing and loosening of either of the nuts or bolts of an adjacent pair of such nuts or bolts as are provided, for example, on rail stretcher bars.

Another object is to provide such a device which is easier to fit than prior art devices.

Yet another object is to provide means whereby the integrity and performance of such a device can be monitored.

According to the invention a rotation inhibiting device comprises a pair of socket elements and a connector element, in which respect each socket element comprises a body provided with a bore, the bore having multiple grooves or angles whereby the body is adapted to be non-rotatably mounted onto a nut or a bolt in a selected one of a plurality of positions and the body having external engagement means in the form of a plurality of grooves around all or only part of its periphery, and the connector element comprises a pair of annular bodies which are permanently connected to each other, each annular body having internal engagement means in the form of a plurality of grooves enabling the annular bodies of the connector element to be releasably and non-rotatably mounted onto the respective socket elements in a selected one of a plurality of positions, but once so mounted tending to inhibit rotation of the respective socket elements.

In use, of course, the pair of socket elements are mounted on adjacent nuts or bolts and the connector element is then fitted thereover. Neither of the nuts (or bolts) is able to become loose to any but the most insignificant extent, by virtue of the non-rotatable fitting of the socket elements to the respective nuts (or bolts) and the linking of these socket elements by the fitting of the connector element to both of the socket elements at the same time.

Advantageously, the annular bodies of the connector element are connected to each other by a link which is configured so that, after the respective nuts or bolts are both tightened, any loosening motion of one of the nuts or bolts is transmitted via the link as a tightening motion to the other of the nuts or bolts, thereby holding each nut or bolt in counterpoise to the other.

In a further development, in some practical embodiments the socket elements may be axially extended so that a portion thereof projects axially beyond the connector element in use and indicator elements may be provided which are adapted to be adjustably but non-rotatably mounted onto these axially projecting portions so as to indicate any rotation of the respective socket elements relative to a reference position.

The invention will be described further, by way of example, with reference to the accompanying drawings, in which:
Fig. 1 is a perspective view showing a first embodiment of the rotation inhibiting device of the invention for fitting onto adjacent square nuts;
Fig. 2 is a similar perspective view of a second embodiment of the device of the invention;
Fig. 3 is a perspective partial view from below showing a third embodiment of the device of the invention, only one of the two socket elements being shown; and
Fig. 4 is a view, comparable to Fig 3, of a fourth embodiment of the device of the invention.

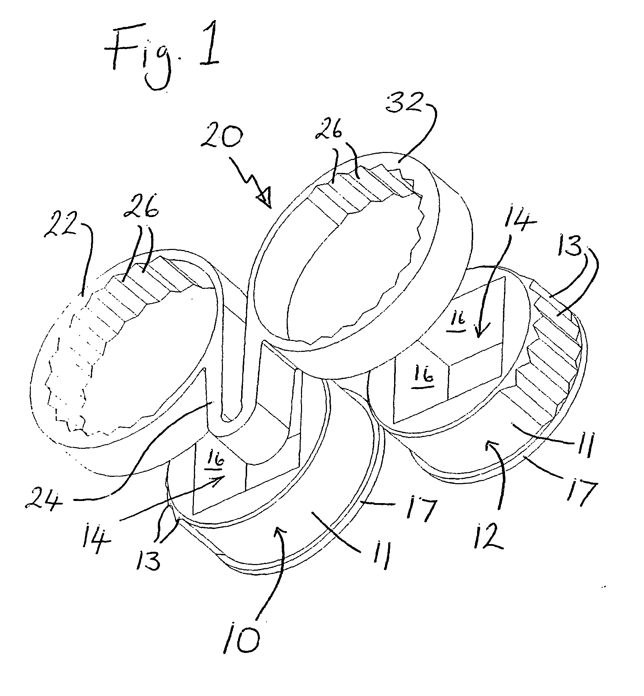

The first embodiment of the device of the invention, as shown in Fig. 1, comprises a connector element 20 and two socket elements 10, 12. The two socket elements 10, 12 are essentially identical. Each consists of a body having a generally circular perimeter and a substantially square bore 14 therethrough. The socket elements may suitably be moulded of plastics material. Engagement means are provided around part of the perimeter of each of the socket elements 10, 12 in the form of a plurality of alternate grooves and teeth 13. Each body may be hollow, having a peripheral wall 11 and four cross walls 16, which define the bore 14 as well as four segmental recesses 17, which are not apparent in Fig. 1 as they are in the rear of the bodies 10, 12, as viewed. Each socket element body 10, 12 also has an outwardly directed annular flange 17 around its lower edge, which serves as a stop for the connector element 20 when fitted thereover.

In use, each socket element 10, 12 is a tight sliding fit over a square nut (not shown). No relative rotation of the socket element 10, 12 upon the nut is possible owing to the angular and close fitting shape of the bore 14.

The connector element 20 consists of a pair of annular bodies 22, 32 connected by a short U-shaped link 24. These are all formed in one piece by a pressing or moulding process and again may be formed of a suitable plastics material. The interior bore of each body or ring 22, 32 is formed, in part, with a plurality of alternate grooves and teeth 26. The U-shaped link 24 serves as a counterpoising link between the rings 22, 32 in that if there is any loosening motion of one nut of the pair, this link will transfer it as a tightening motion, in the opposite direction, to the other nut, by way of the respective socket elements 10, 12.

In this embodiment of the invention this connector element 20 is a snug, secure fit over a pair of socket elements 10, 12, the internal teeth 26 of each ring 22, 32 of the connector 20 engaging the teeth 13 around the perimeter of a respective socket element 10, 12. Any rotational position of the socket elements 10, 12, relative to the rings 22, 32 can be accommodated, as regards fitting position, because of the multiplicity of teeth/grooves 13, 26, but once fitted substantially no relative rotation is possible.

A novel rotation inhibiting system is provided, in accordance with the invention, when respective socket elements 10, 12 are mounted onto adjacent nuts and a connector element 20 is then fitted onto those socket elements 10, 12, as shown in Figure 1, to prevent any rotation thereof. Square headed nuts are the type used in the railway and other industries. They are commonly used in pairs, with their centres spaced apart by a very short distance compared to the size of the nuts. The connector element 20 is dimensioned so as to fit over the socket elements when they themselves are mounted at such close spacing.

In practice, the nuts are firstly tightened to the required torque value. Then socket elements 10, 12 are mounted onto each of them with their raised annular flanges 17 nearest the lower faces of the nuts. Then a connector element 20 is fitted thereover, as shown, to abut the annular flanges 17.

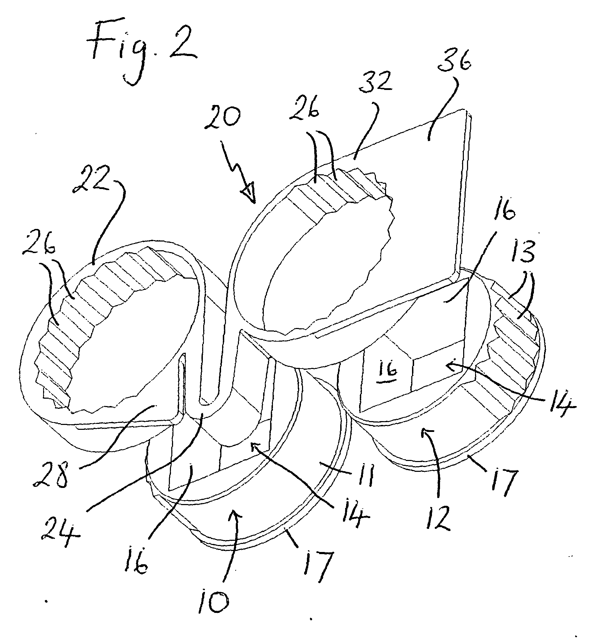

The second embodiment shown in Figure 2 is very similar in form to the first and it is not necessary to repeat the description, it being sufficient to designate corresponding parts with the same reference numerals as in Fig. 1. The only difference is that for branding or labelling purposes, one ring 22 of the connector 20 is formed with an integral triangular projection 28, while the other ring 32 is formed with an integral rectangular projection 36.

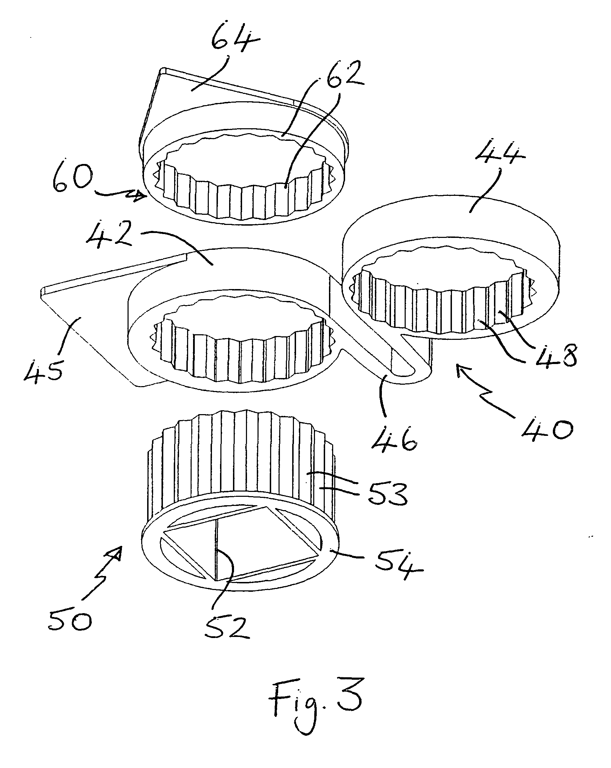

The third embodiment of the device of the invention, as shown in Fig. 3, comprises a connector element 40, two socket elements, only one of which 50 is shown, and two indicator elements 60, again only one of which is shown. As in the earlier embodiments, each socket element 50 consists of a body having a generally circular or cylindrical perimeter and a substantially square bore 52 therethrough. Again they may suitably be moulded of plastics material. Again they have grooves or serrations 53 as engagement means around the perimeter, externally. Also, as in the earlier embodiments these sockets 50 have an outwardly directed annular flange 54 at one end, which is the lower end or inner end in use.

The main difference compared to the preceding embodiments is that the sockets 50 are considerably deeper than the annular bodies 42, 44 of the connector element 40.

The connector element 40, as previously, consists of two annular bodies or rings 42, 44 connected by a U-shaped strip 46, which serves as a counterpoising link. The interior bore of each ring 42, 44 is again provided with grooves or serrations 48 in order to non-rotatably engage with the socket perimeter serrations 53 in any one of a plurality of possible positions. One of the rings 42 is provided with a rectangular projection 45 which may serve for labelling purposes.

Each indicator element 60 is a further annular body having internal grooves or serrations 62 and a laterally projecting pointer 64.

In use, the socket elements 50 are firstly fitted onto adjacent square nuts. The flanges 54 are positioned lowermost. The rings 42, 44 of the connector element 40 are then fitted over the two socket elements to abut these flanges 54. Their respective serrations 53, 48 inter-engaging to prevent relative rotation. However, these deeper socket elements 50 project upwards beyond the connector element 40 and the respective indicator elements 60 are mounted thereon, with their internal serrations 62 intermeshing with the external serrations 53 of the respective socket elements 50, again preventing relative rotation.

In practice, the pointers 64 will be aligned at the outset in a predetermined direction, towards some reference point. For instance, where the nuts to which the device is fitted are on the side of a railway fishplate, the pointers may be directed, initially, vertically upwards. This may enable its position to be detected and monitored by automated means. The initial position of the indicator elements 60 can be chosen appropriate to the required orientation of their pointers 64 because of the multiple serrations 62, 53 on each of them and on the socket elements over which they are fitted.

If either of the nuts to which the socket elements 50 are mounted should loosen, the respective ring of the connector element 40 will limit such loosening motion and the link 46 therein will tend to transmit a counter-direction tightening motion to the other ring of the connector element 40. The rotation of either one of the nuts will thus be transmitted to the respective indicator element 60 and its pointer 62 will move from its initial position, the different position then being visually detectable by an operator or automated inspection means.

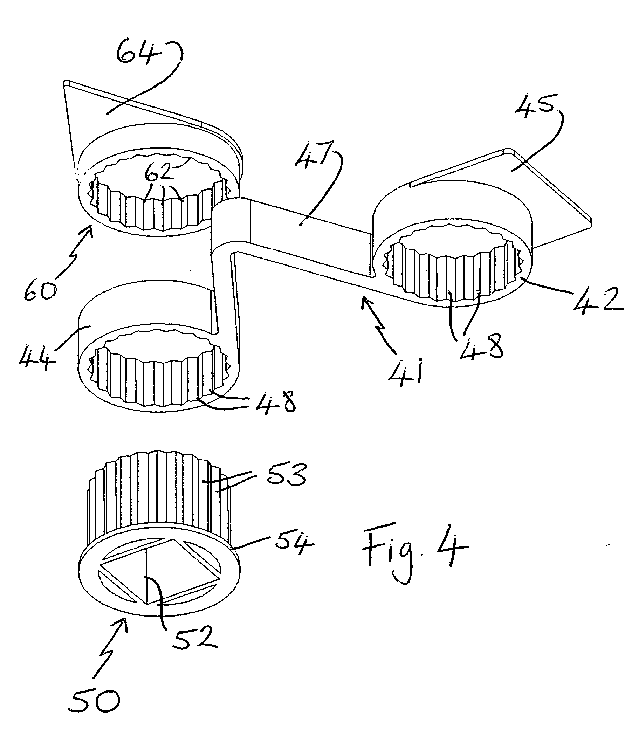

The fourth embodiment, shown in Figure 4, is very similar indeed to the third embodiment above, and it is not necessary to repeat the description in respect of corresponding parts which have been allocated the same reference numerals as in Figure 3.

The difference is that this device is designed for fitting to more widely spaced nuts. Therefore, the link 47 between the rings 42, 44 of the connector element 41 is of a different shape, being a wide V-shape instead of a narrow U-shape, i.e. the limbs thereof spaced apart. In all other respects it is the same and functions in the same manner.

The invention is not limited to the specific details of these illustrated examples. In particular, it is applicable also to bolts, and to nuts/bolts of hexagonal or other shape, in which case the bore in the socket elements will match or may be formed with plural grooves or teeth. The exact shape and dimensions of the device may vary. One or both of the rings of the connector element may have an opening therein so as not to be a complete annulus. The form of the connection between the respective rings of the connector element may vary. These rings may be directly conjoined, or have a straight connector strip or one of some other shape than a U or V. The form of any of the integral projections on the connector element may also vary. Finally, an alternative form of indicator means may be provided. Where it is similar to that described above, the pointer may vary in its configuration and disposition. Instead of projecting laterally/radially from the annular body it could project axially. This would also allow any change in its rotational position to be detected visually or by touch in an automated procedure.

## Claims

1. A rotation inhibiting device for adjacent nuts or bolts comprises a pair of socket elements (10, 12; 50) and a connector element (20; 40; 41), in which respect each socket element comprises a body provided with a bore (14), the bore having multiple grooves or angles whereby the body is adapted to be non-rotatably mounted onto a nut or a bolt in a selected one of a plurality of positions and the body having external engagement means in the form of a plurality of grooves (13; 53) around all or only part of its periphery, and the connector element (20; 40; 41) comprises a pair of annular bodies (22, 32; 42, 44) which are permanently connected to each other, each annular body having internal engagement means in the form of a plurality of grooves (26; 48) enabling the annular bodies of the connector element (20; 40; 41) to be releasably and non-rotatably mounted onto the respective socket elements (10, 12; 50) in a selected one of a plurality of positions, but once so mounted tending to inhibit rotation of the respective socket elements.

2. A device according to claim 1 wherein the annular bodies (22, 32; 42, 44) of the connector element (20; 40; 41) are connected to each other by a link (24; 46; 47) which is configured so that, after the respective nuts or bolts are both tightened, any loosening motion of one of the nuts or bolts is transmitted via the link (24; 46; 47) as a tightening motion to the other of the nuts or bolts, thereby holding each nut or bolt in counterpoise to the other.

3. A device according to claim 1 or 2 wherein at least one of the socket elements (50) is axially extended so that a portion thereof projects axially beyond the connector element (40; 41) in use and wherein an indicator element (60) is provided which is adapted to be adjustably but non-rotatably mounted onto this axially projecting portion so as to indicate any rotation of the said socket element (50) relative to a reference position.

## Patentansprüche

1. Vorrichtung zum Hemmen einer Drehung für benachbarte Muttern oder Bolzen, umfassend ein Paar von Hülsenelementen (10; 12; 50) und ein Verbinderelement (20; 40; 41), wobei jedes Hülsenelement einen Körper umfasst, der mit einer Bohrung (14) versehen ist, wobei die Bohrung mehrere Rillen oder Kanten aufweist, wobei der Körper angepasst ist, um nicht-drehbar in einer ausgewählten von mehreren Stellungen auf einer Mutter oder einem Bolzen angebracht zu werden, und der Körper äußere Eingriffmittel in der Form mehrerer Rillen (13; 53) um seinen ganzen oder nur einen Teil seines Umfangs aufweist, und das Verbinderelement (20; 40; 41) ein Paar ringförmiger Körper (22; 32; 42; 44) umfasst, die dauerhaft mit einander verbunden sind, wobei jeder ringförmige Körper innere Eingriffmittel in der Form mehrerer Rillen (26; 48) aufweist, welche es ermöglichen, dass die ringförmigen Körper des Verbinderelements (20; 40; 41) lösbar und nicht-drehbar in einer ausgewählten von mehreren Stellungen auf den jeweiligen Hülsenelementen (10; 12; 50) angebracht werden können, aber, wenn sie einmal angebracht sind, dazu neigen, eine Drehung der jeweiligen Hülsenelemente zu hemmen.

2. Vorrichtung gemäß Anspruch 1, wobei die ringförmigen Körper (22; 32; 42; 44) des Verbinderelements (20; 40; 41) mit einander durch eine Verbindung (24; 46; 47) verbunden sind, die so ausgelegt ist, dass, nachdem die jeweiligen Muttern oder Bolzen beide befestigt sind, jede Lösebewegung von einer der Muttern oder einem der Bolzen über die Verbindung (24; 46; 47) als eine Festzieh-Bewegung auf die andere der Muttern oder den anderen der Bolzen übertragen wird, wodurch jede Mutter oder jeder Bolzen im Gegengewicht zu der/dem anderen gehalten werden.

3. Vorrichtung gemäß Anspruch 1 oder 2, wobei mindestens eines der Hülsenelemente (50) sich axial so erstreckt, dass sich ein Abschnitt davon während der Verwendung axial über das Verbinderelement (40; 41) hinaus erstreckt, und wobei ein Anzeigeelement (60) bereitgestellt ist, welches angepasst ist, um einstellbar, aber nicht-drehbar auf diesem axial vorragenden Abschnitt angebracht zu werden, um jede Drehung des Hülsenelements (50) relativ zu einer Bezugsstellung anzuzeigen.

## Revendications

1. Dispositif d'inhibition de rotation pour des écrous ou boulons adjacents comprenant une paire d'éléments de douille (10, 12 ; 50) et un élément de connexion (20 ; 40 ; 41), par rapport auquel chaque élément de douille comprend un corps prévu avec un alésage (14), l'alésage ayant des rainures ou des angles multiples où le corps est adapté pour être monté de manière non rotative sur un écrou ou un boulon dans une position sélectionnée parmi une pluralité de positions et le corps ayant des moyens d'engagement externe sous la forme d'une pluralité de rainures (13 ; 53) autour de la totalité, ou seulement une partie, de sa périphérie, l'élément de connexion (20 ; 40 ; 41) comprend une paire de corps annulaires (22, 32 ; 42, 44) qui sont connectés de manière permanente l'un à l'autre, chaque corps annulaire ayant des moyens d'engagement interne sous la forme d'une pluralité de rainures (26 ; 48) permettant aux corps annulaires de l'élément de connexion (20 ; 40 ; 41) d'être montés de manière détachable et non rotative sur les éléments de douille respectifs (10, 12 ; 50) dans une position sélectionnée parmi une pluralité de positions, mais une fois qu'il est ainsi monté, qui tend à inhiber la rotation des éléments de douille respectifs.

2. Dispositif selon la revendication 1, **caractérisé en ce que** les corps annulaires (22, 32 ; 42, 44) de l'élément de connexion (20 ; 40 ; 41) sont connectés l'un à l'autre par un lien (24 ; 46 ; 47) qui est configuré de manière telle que, après que les écrous ou boulons respectifs aient été tous les deux resserrés, tout mouvement de desserrement de l'un des écrous ou boulons est transmis par le lien (24 ; 46 ; 47) comme un mouvement de resserrement vers l'autre écrou ou boulon, maintenant ainsi chaque écrou ou boulon en équilibre par rapport à l'autre.

3. Dispositif selon la revendication 1 ou 2, **caractérisé en ce qu'**au moins un des éléments de douille (50) est axialement étendu de manière à ce qu'une partie de celui-ci se projette axialement au-delà de l'élément de connexion (40 ; 41) lors de son fonctionnement et **en ce qu'**un élément d'indication (60) est prévu qui est adapté pour être monté de manière ajustable et non rotative sur cette partie de projection de manière axiale afin d'indiquer toute rotation dudit élément de douille (50) par rapport à une position de référence.
